# FASCICULE DE BREVET EUROPEEN

(11) **EP 3 724 709 B1**
(45) Date de publication et mention de la délivrance du brevet: **30.11.2022**
(21) Numéro de dépôt: 18830766.4
(22) Date de dépôt: 14.12.2018
(51) Int. Cl.: G02B 21/16, G01J 3/02, G01J 3/28, G01J 3/44, G02B 26/08

(54) **MICROSCOPIE 3D SPECTRALE EN CHAMP LARGE**
3D-SPEKTRALMIKROSKOPIE MIT GROSSEM SICHTFELD
LARGE-FIELD 3D SPECTRAL MICROSCOPY

(30) Priorité: 14.12.2017 FR 1762162
(43) Date de publication de la demande: 21.10.2020
(73) Titulaire: Alveole, 75005 Paris (FR); Centre National de la Recherche Scientifique, 75016 Paris (FR); Université de Bordeaux, 33000 Bordeaux (FR)
(72) Inventeur: STUDER, Vincent, 33000 Bordeaux (FR); GALLAND, Rémi, 33600 Pessac (FR)
(74) Mandataire: Osha Liang
(86) Numéro de dépôt international: PCT/EP2018/085062
(87) Numéro de publication internationale: WO 2019/115807

(56) Documents cités:
- GIBSON G M ET AL: "Paper;A multi-object spectral imaging instrument;A multi-object spectral imaging instrument", JOURNAL OF OPTICS, INSTITUTE OF PHYSICS PUBLISHING, BRISTOL GB, vol. 15, no. 8, 30 juillet 2013 (2013-07-30), page 85302, XP020249048, ISSN: 2040-8986, DOI: 10.1088/2040-8978/15/8/085302
- BEDARD NOAH ET AL: "Image mapping spectrometry: calibration and characterization", OPTICAL ENGINEERING, SOC. OF PHOTO-OPTICAL INSTRUMENTATION ENGINEERS, BELLINGHAM, vol. 51, no. 11, 1 novembre 2012 (2012-11-01), page 111711, XP060025338, ISSN: 0091-3286, DOI: 10.1117/1.OE.51.11.111711 [extrait le 2012-07-13]
- CHAKROVA NADYA ET AL: "Development of a DMD-based fluorescence microscope", PROGRESS IN BIOMEDICAL OPTICS AND IMAGING, SPIE - INTERNATIONAL SOCIETY FOR OPTICAL ENGINEERING, BELLINGHAM, WA, US, vol. 9330, 9 mars 2015 (2015-03-09), pages 933008-933008, XP060049236, ISSN: 1605-7422, DOI: 10.1117/12.2077677 ISBN: 978-1-5106-0027-0
- LIANG GAO ET AL: "Snapshot Image Mapping Spectrometer (IMS) with high sampling density for hyperspectral microscopy", OPTICS EXPRESS, vol. 18, no. 14, 5 juillet 2010 (2010-07-05), page 14330, XP055018331, ISSN: 1094-4087, DOI: 10.1364/OE.18.014330

## Description

### DOMAINE TECHNIQUE

L'invention concerne le domaine de la microscopie optique de fluorescence en champ large et notamment la microscopie spectrale de fluorescence en champ large, dans laquelle une image d'un objet fluorescent est enregistrée pour plusieurs longueurs d'onde sur un détecteur linéaire ou matriciel d'une caméra. Tout particulièrement, l'invention est applicable à la microscopie de fluorescence en champ large en trois dimensions (3D) spectrale (ou multi-couleurs ou en pseudo-couleurs).

La microscopie de fluorescence ou en fluorescence connaît au moins deux types de microscopes, les microscopes à ou en champ large et les microscopes confocaux. Dans les microscopes à champ large, le champ est déterminé par un diaphragme de champ à deux dimensions (2D). Dans les microscopes confocaux, le diaphragme de champ est réduit à une dimension (fente) ou à zéro dimension (diaphragme en forme de trou).

Il est particulièrement simple d'utiliser un élément dispersif ou un spectromètre de tout type avec un microscope confocal, pour en faire un imageur spectral. Il suffit, en effet, d'utiliser un détecteur monochromatique ayant une dimension de plus que le diaphragme de champ et de disperser les composantes du spectre de la lumière selon cette dimension avec un élément dispersif connu de l'art antérieur (prisme, réseau, spectromètre de Michelson, ...). Par exemple, avec un microscope confocal muni d'un trou, il est possible d'utiliser une barrette linéaire pour recueillir le spectre dispersé par un prisme éclairé par le trou. Selon un autre exemple, avec un microscope confocal muni d'une fente, il est possible d'utiliser une barrette matricielle ou à deux dimensions, pour recueillir le spectre dispersé par un prisme éclairé par la fente disposée non parallèlement à la direction de la dispersion du prisme.

Par contre, il est impossible, dans l'art antérieur, d'utiliser un élément dispersif avec un microscope à champ large, sans diminuer sévèrement la résolution des images enregistrées, aucune dimension d'un détecteur matriciel ou à deux dimensions (2D) ou caméra, n'étant disponible pour enregistrer les composantes spectrales de l'image, le plein champ 2D du détecteur pouvant être occupé par l'image.

En pratique, dans l'art antérieur, la transformation d'un microscope à champ large associé à un détecteur matriciel monochromatique, en microscope sensible ou donnant accès au contenu spectral de la lumière de fluorescence émise par un objet dans tout le champ du microscope est donc un problème difficile.

La microscopie spectrale en champ large qui permet a priori d'enregistrer en parallèle les points d'une image à une cadence supérieure aux microscopes confocaux, séquentiels, serait pourtant une technique souhaitable pour enregistrer des objets dynamiques, tout particulièrement en trois dimensions.

### DÉFINITIONS

Dans toute la demande, qui concerne le domaine de l'optique, les mots « disposés entre » pour des éléments d'un dispositif optique, désignent une disposition spatiale de ces éléments adaptée à leur permettre d'accomplir une fonction optique, notamment de conjugaison, de transmission, de déviation, de dispersion ou de réflexion optiques.

Dans la présente demande, on entendra par :
Couleur ou pseudo-couleur : une mesure par une caméra de la répartition spectrale d'une lumière de fluorescence. On comprendra que des fluorophores de natures différentes auront des couleurs différentes.

Séparateur : une lame optique ou un miroir dichroïque traité(e) pour réfléchir partiellement et transmettre partiellement une lumière incidente, avec des caractéristiques spectrales différentes pour la lumière transmise et réfléchie. Dans une utilisation pour la microscopie par fluorescence, un tel séparateur sera par exemple optimisé pour réfléchir avec peu de pertes (i.e. le moins possible) un spectre d'excitation ou d'illumination et transmettre avec peu de pertes un spectre de fluorescence. Un séparateur ou une lame séparatrice dichroïque, vis-à-vis d'une lumière d'illumination et d'une lumière de fluorescence, placé devant une caméra sera en pratique, un empilement de couches minces optiques servant à isoler la caméra de la lumière d'illumination pour permettre de détecter la lumière de fluorescence d'intensité de plusieurs ordres de grandeur plus faible sans saturer la caméra.

Caméra ou caméra monochromatique : dispositif optique muni d'un détecteur matriciel (i.e. à deux dimensions ou 2D) composé de pixels de caméra ou « pixels caméra », ne permettant pas de distinguer la couleur au niveau d'un pixel caméra ou enregistré par la caméra, l'image étant enregistrée en niveaux d'énergie intégrés (aussi appelés niveaux de gris) sur tout le spectre reçu et pour lequel le détecteur matérialisant le pixel caméra a un rendement quantique aussi élevé que possible.

Prisme : un élément optique en dièdre dispersant la lumière dans un plan perpendiculaire à l'arête du dièdre en raison de la variation de son indice optique avec la longueur d'onde ou la couleur de la lumière qu'il transmet.

Modulateur spatial : un élément optique capable d'appliquer des différences d'énergie variables spatialement à une lumière transmise ou réfléchie par l'élément. Un tel élément permet de disposer à partir d'une source large, d'un motif de pixels arbitrairement choisis (un pixel étant la plus petite dimension ou période de modulation de l'élément). Des exemples de modulateurs spatiaux sont notamment un disque perforé tournant (en anglais, «spinning disk») ou une matrice à deux dimensions de micro-miroirs (DMD) ou encore un modulateur à cristaux liquides (SLM). Un modulateur peut notamment sélectionner un point ou pixel unique mais aussi un objet discret ou motif discret ou objet modulé discret ou motif modulé discret, constitué d'un ensemble de points ou pixels séparés spatialement et répartis régulièrement, qui se prête à la suppression d'un fond continu dans l'image de l'objet. Le DMD permet ainsi une illumination parallèle d'un ensemble de points choisis, sans déplacement de l'objet.

Grille : un objet discret (ou ses différentes images), composé d'un ensemble de pixels répartis sur une matrice à deux dimensions, coïncidant avec les nœuds d'un réseau de points, en général disposé dans un plan.

### ARRIÈRE PLAN

L'art antérieur connaît des dispositifs d'imagerie comprenant un microscope, utilisant une matrice de micro-miroirs de réflexion, disposée sur un chemin optique d'illumination ou d'excitation du microscope. Le microscope possède aussi un chemin d'imagerie pour collecter par exemple une lumière de fluorescence induite par l'illumination, sur une matrice de capteurs ou pixels d'une caméra (CMOS, CCD, etc.). La lumière de fluorescence est de bande spectrale variable ou de couleur différente en fonction de la nature des différentes molécules soumises à l'illumination et de la composition spectrale de la ou les sources lumineuses d'excitation.

Une condition importante pour la qualité d'un système de microscopie spectrale utilisant la fluorescence, est d'assurer non seulement la formation des images d'un même point objet dans différentes bandes spectrales mais aussi d'assurer le maintien de la superposition spatiale de ces images du point de l'objet à la précision d'un pixel de la caméra, c'est-à-dire le maintien de la référence spatiale pour chaque point de l'objet.

L'utilisation d'une caméra monochromatique pour réaliser un système spectral nécessite dans l'art antérieur d'enregistrer les images spectrales en séquence, à l'aide de filtres interférentiels, puis à superposer ces images dans un système de visualisation pour recréer une image simultanée de toutes les bandes spectrales en les référençant les unes aux autres. Il est alors connu que pour ne pas dégrader la résolution de ces systèmes à filtres interférentiels, ces filtres doivent être d'un parallélisme quasi parfait, de l'ordre de quelques secondes d'arc. Ces filtres sont dits à décalage de pixels nul (« zero shift ») parce que leur angle au sommet est quasiment nul induisant un décalage nul ou inférieur à un pixel de caméra lorsqu'ils sont introduits sur le faisceau.

En conséquence, dans l'art antérieur, l'introduction d'un élément non parfaitement parallèle sur le chemin optique d'imagerie d'un système de microscopie à résolution limitée par la caméra et utilisant la fluorescence est considéré comme néfaste. Plus généralement, pour faire de l'imagerie de fluorescence avec une caméra monochromatique, les éléments qui peuvent être introduits sur le chemin optique, pour sélectionner une bande spectrale, sont présumés dans l'art antérieur comme devant être à décalage de pixels nul sur la caméra (« zero shift »). Cette condition fait présumer que les éléments pouvant être introduits sur le chemin optique doivent être à déviation nulle et à dispersion de la déviation nulle en fonction de la longueur d'onde, à l'image des filtres interférentiels à décalage de pixels nul ( comme par exemple les filtres de la société « Semrock » aux USA ) dont le parallélisme est à zéro pixel, ou en pratique inférieur à quelques secondes d'arc ( 1/60^{ième} de milliradian). Une telle propriété est obtenue en pratique par un tri sur des filtres une fois réalisés, car elle est hors de portée de la précision de fabrication possible industriellement pour des lames à faces planes et parallèles.

L'art antérieur connaît aussi les prismes et d'autres éléments dispersifs (réseaux, etc.) mais ceux-ci ne sont pas, dans l'art antérieur, à la tolérance de parallélisme requise pour les systèmes à décalage de pixel nul ou zéro pixel. Tout particulièrement, le prisme qui est à la fois déviateur de faisceau sur un grand angle et dispersif en longueur d'onde semble particulièrement inadapté aux systèmes à décalage de pixel nul.

Enfin, les filtres interférentiels devant être introduits en séquence sur le chemin optique, il en résulte une limitation importante de la cadence d'acquisition, limitée par la vitesse d'escamotage des filtres. Cette limitation ralentit aussi, en pratique, de tels systèmes pour la microscopie 3D, dans laquelle les points de mesure sont pris dans des plans parallèles à un plan objet, le long de l'axe optique du microscope ou « axe Z », perpendiculaire au plan objet. Le document "Development of a DMD-based fluorescence microscope" par Chakrova et al. publié dans Proc. of SPIEEE, vol. 9330, page 933008-1 montre un microscope de fluorescence en champ large comprenant un modulateur DMD et permettant une analyse spectrale.

### PRÉSENTATION GÉNÉRALE

Dans ce contexte, l'invention concerne un microscope de fluorescence à champ large pour l'observation d'un plan objet dans un milieu objet tridimensionnel apte à émettre une lumière de fluorescence en réponse à une lumière d'illumination, qui comprend une première voie optique pour la lumière d'illumination, une deuxième voie optique pour la lumière d'illumination et la lumière de fluorescence et une troisième voie optique pour la lumière de fluorescence, dans lequel la première voie comprend un modulateur spatial limitant le champ du microscope à champ large, dans lequel la deuxième voie s'étend entre le plan objet et un séparateur, dichroïque vis-à-vis de la lumière d'illumination et de la lumière de fluorescence, dans lequel la troisième voie s'étend entre la deuxième voie et une caméra apte à détecter la lumière de fluorescence, dans lequel le microscope comprend un moyen optique pour conjuguer le modulateur spatial avec le plan objet pour la lumière d'illumination et pour conjuguer le plan objet avec la caméra pour la lumière de fluorescence et dans lequel la troisième voie comprend un élément optique dispersif pour la lumière de fluorescence.

Dans des variantes:
- le moyen optique comprend un objectif de microscope disposé sur la deuxième voie.
- le moyen optique comprend un premier objectif de microscope disposé sur la première voie et un second objectif de microscope disposé sur la deuxième voie.
- l'élément optique dispersif est un prisme.
- le modulateur spatial est une matrice de micro-miroirs (DMD).
- le modulateur spatial est un disque tournant.

L'invention concerne aussi un procédé pour la calibration à une première longueur d'onde du microscope à champ large, comprenant les étapes suivantes:
- disposer dans un voisinage du plan objet un milieu objet apte à émettre de la lumière de fluorescence dans une première bande spectrale contenant la première longueur d'onde, en réponse à une première lumière d'illumination,
- disposer sur la troisième voie un premier filtre interférentiel apte à sélectionner spectralement un voisinage de la première longueur d'onde,
- illuminer séquentiellement par la première lumière d'illumination, chaque point du champ large du microscope dans le plan objet, au moyen du modulateur spatial,
- enregistrer une première image de chaque point du champ large du microscope, sur la caméra,
- enlever le premier filtre interférentiel de la troisième voie.

Dans une variante du procédé, l'invention concerne aussi un procédé pour la calibration à une deuxième longueur d'onde du microscope à champ large, consistant à répéter les étapes de la calibration à la première longueur d'onde, avec un deuxième filtre interférentiel, apte à sélectionner spectralement un voisinage de la deuxième longueur d'onde, pour obtenir une deuxième image de chaque point du champ large du microscope, enregistrée avec le deuxième filtre interférentiel, sur la caméra.

L'invention concerne aussi un procédé d'utilisation du microscope à champ large calibré à la première longueur d'onde et à la deuxième longueur d'onde, comprenant les étapes suivantes :
- disposer au voisinage du plan objet, un échantillon apte à émettre une lumière de fluorescence dans un spectre de longueurs d'onde comprenant le voisinage de la première longueur d'onde et le voisinage de la seconde longueur d'onde, en réponse à une lumière d'illumination,
- illuminer le champ large du microscope selon une grille de points, au moyen du modulateur spatial,
- enregistrer l'image de chaque point de la grille pour le spectre de longueurs d'onde, sur la caméra,
- répéter les deux étapes ci-dessus en appliquant des translations à la grille dans le champ large du microscope, au moyen du modulateur spatial, jusqu'à avoir enregistré une image pour le spectre de longueurs d'onde de chaque point du champ large du microscope sur la caméra,
- déduire par traitement d'image, une première image d'un point de l'échantillon à la première longueur d'onde, à partir de la première image de ce point à la première longueur d'onde, obtenue par le procédé de calibration et de l'image de ce point pour le spectre de longueurs d'onde,
- déduire par traitement d'image, une deuxième image du point de l'échantillon à la deuxième longueur d'onde, à partir de l'image de ce point à la deuxième longueur d'onde, obtenue par le procédé de calibration et de l'image de ce point pour le spectre de longueurs d'onde.

Dans une variante, l'invention concerne un procédé pour obtenir une image spectrale d'un échantillon, sectionnée le long d'un axe optique du microscope à champ large, dans lequel le traitement d'image comprend l'étape suivante:
- supprimer le fond continu dans les images enregistrées par la caméra.

### BRÈVE DESCRIPTION DES DESSINS

L'invention sera mieux comprise en lien avec les dessins annexés, les numéros de référence renvoyant à ces dessins. Les dessins annexés sont schématiques et ne sont pas à l'échelle, ils visent avant tout à illustrer les principes de l'invention.

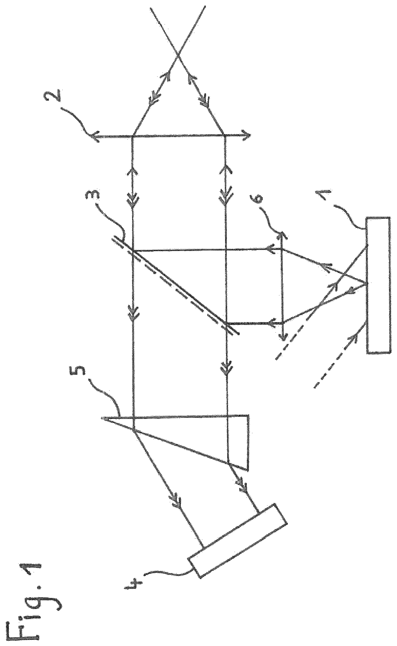

La figure 1 représente un exemple de système de microscopie par fluorescence.

### DESCRIPTION DÉTAILLÉE D'EXEMPLE(S)

L'exemple de système de microscopie par fluorescence de la figure 1 comprend un modulateur spatial 1 conjugué du plan focal objet d'un objectif de microscope 2 formant une image de son plan focal objet, sur une caméra 4 via un séparateur de faisceau ou séparateur 3 et comprenant un élément dispersif qui est, sur cette figure 1, un prisme 5 disposé entre le séparateur de faisceau 3 et la caméra 4.

Le modulateur spatial 1 est conjugué optiquement du plan focal objet de l'objectif de microscope 2, via une lentille 6 (au foyer de laquelle le modulateur spatial 1 est disposé), via le séparateur 3 opérant par réflexion sur cette voie dite d'illumination, et via l'objectif de microscope 2. Le séparateur 3, opère par réflexion pour une lumière d'illumination réfléchie par le modulateur spatial 1, ici un DMD ou matrice de micro-miroirs. La lumière d'illumination est fournie au modulateur spatial 1 par une source de lumière non représentée sur la figure 1.

Le séparateur 3, opère aussi par transmission pour une lumière de fluorescence, émise par un objet fluorescent exposé à la lumière d'illumination et disposé dans le plan focal objet.

La lumière d'illumination et la lumière de fluorescence, sont transmises en sens inverse entre le séparateur 3 et le plan focal objet de l'objectif de microscope 2, notamment à travers l'objectif de microscope 2.

Un moyen optique connu, non représenté, comme un filtre à encoche (« Notch filter ») permet, si nécessaire, de s'assurer qu'aucune lumière d'illumination n'est détectable sur la caméra 4.

La figure 1 représente un exemple de dispositif optique pour la microscopie optique de fluorescence comprenant un modulateur spatial 1, un objectif de microscope 2, un séparateur 3 et une caméra 4, dans lequel le séparateur 3 est disposé entre le modulateur spatial 1 et l'objectif de microscope 2, dans lequel le séparateur 3 est disposé entre la caméra 4 et l'objectif de microscope 2, et dans lequel un prisme 5 servant d'élément dispersif est disposé entre le séparateur 3 et la caméra 4.

Le modulateur spatial 1 est disposé sur une voie ou chemin optique d'illumination aboutissant à une première face ou d'un côté du séparateur dichroïque 3. Il existe une voie optique ou chemin optique d'illumination et de fluorescence entre cette première face du séparateur 3 et le plan objet, ici plan focal objet de l'objectif de microscope 2, et il existe entre la deuxième face ou le deuxième côté du séparateur 3 jusqu'à la caméra 4, une troisième voie optique ou chemin optique de fluorescence. Dans un fonctionnement optique normal, seule la lumière d'illumination parcourt la première voie optique, seule la lumière de fluorescence parcourt la troisième voie et les deux lumières parcourent la deuxième voie, ici selon des sens opposés. De façon équivalente, il serait possible plutôt que de collecter la lumière de fluorescence par l'objectif de microscope 2, de la collecter de l'autre côté du plan focal objet par un autre objectif de microscope et une autre caméra, via un autre séparateur dichroïque pour la lumière d'illumination, autre séparateur dichroïque pouvant ici fonctionner en incidence inclinée mais aussi normale, afin de ne conserver de la même façon que la lumière de fluorescence sur l'autre caméra.

Un premier mode de réalisation, en référence à la figure 1, concerne un système de microscopie par fluorescence comprenant le modulateur spatial 1, qui est un DMD ou matrice de micro-miroirs, conjugué du plan focal objet de l'objectif de microscope 2, via la lentille 6 et le séparateur 3. Un modulateur à cristaux liquides ou tout modulateur d'amplitude par réflexion ou par transmission serait adapté au présent mode.

Le DMD est éclairé par un faisceau lumineux adapté à l'excitation de fluorophores et de longueur d'onde comprise couramment entre 350 nm et 800 nm. Il est conjugué du plan focal objet du microscope et donc de l'objet, qu'il permet d'éclairer de façon sélective par différents motifs de points espacés à deux dimensions.

Ce faisceau permet d'exciter la fluorescence d'un objet dans le plan focal objet pour les points sélectionnés par une électronique connue, associée au DMD. Communément, le faisceau d'illumination est constitué de plusieurs lasers regroupés sur un même chemin optique, pour pouvoir exciter chacun un fluorophore lorsque celui-ci est présent dans l'objet. Une source composée de plusieurs raies peut également être adaptée si la puissance de cette source est suffisante.

Cette voie dite d'illumination pour le microscope permet donc de véhiculer une lumière d'excitation, jusqu'au plan focal objet de l'objectif de microscope 2. Sur ce chemin, la lame semi-réfléchissante ou lame séparatrice ou séparateur de faisceau de retour ou séparateur 3, réfléchit sans dispersion le faisceau d'illumination.

De façon connue de l'art antérieur, le séparateur transmet sans dispersion significative la lumière de fluorescence.

Le séparateur de faisceau est typiquement un miroir dichroïque associé à un filtre interférentiel disposé entre le miroir dichroïque et la source qui peut être une lampe à vapeur de mercure, une source composée d'une ou plusieurs LED collimatées ou un faisceau rectiligne issu du mélange de plusieurs lasers.

L'objectif 2 forme ainsi après excitation de la fluorescence de l'objet, non-représenté, une image sur une caméra 4 d'une section de cet objet au plan focal objet pour les longueurs d'onde du spectre de fluorescence, le microscope dispose à cette fin d'une lentille dite de tube qui forme l'image sur la matrice ccd ou cmos de la camera. Couramment, ce spectre est le spectre visible, et l'image est formée sur la caméra 4 via le séparateur de faisceau 3, qui joue le rôle de miroir sélectif en longueur d'onde entre le spectre d'excitation et le spectre de fluorescence. Par exemple, le séparateur de faisceau peut être disposé à 45° d'angle par rapport à l'axe optique ce qui réfléchit le faisceau réfléchi à 90° ou angle droit. Toute autre valeur d'inclinaison de la normale au plan du séparateur qui permet d'illuminer la caméra 4 avec le spectre de fluorescence, c'est-à-dire de séparer l'illumination et le faisceau émis par un objet dans le plan focal de l'objectif 2, du faisceau d'excitation, est également adaptée.

L'introduction du prisme 5 sur la voie d'imagerie séparée du faisceau d'illumination par le séparateur de faisceau 3 provoque une déviation de l'image, une dispersion en longueur d'onde dans l'image et la formation d'une image polychromatique sur plusieurs pixels de la caméra 4, sous forme d'un ensemble d'image décalées en longueur d'onde pour un même point de l'objet. Toute référence spatiale et spectrale est donc perdue, pour les images considérées, et les images de pixels contigus sont mélangées et brouillées.

Deux difficultés sont donc à surmonter, déterminer le décalage latéral entre les images, repérable par leur angle autour de l'arête du prisme ou droite d'intersection des plans de ses faces et être capable d'enregistrer sélectivement chaque image à une longueur d'onde donnée en provenance d'un même pixel.

On décrit ainsi d'abord ci-dessous une utilisation particulière du DMD pour enregistrer sélectivement les images à différentes longueurs d'onde (séparées angulairement par le prisme, puis séparées spatialement sur le détecteur de la caméra par focalisation via un objectif de la caméra) d'un même pixel et les superposer. Puis, on décrira un procédé de calibration permettant de retrouver une référence spectrale absolue par la localisation d'une couleur, puis une référence spectrale relative par la localisation d'une deuxième couleur. Un tel procédé pouvant se généraliser à un nombre quelconque de couleurs, sous réserve de séparer ou distinguer sur la caméra les différentes images (monochromes ou en niveaux de gris reçues).

Pour enregistrer sélectivement les images à différentes longueurs d'onde d'un même pixel et les superposer, la dispersion du prisme intervenant classiquement selon une seule direction, dans un plan perpendiculaire à son arête, on utilise des images du DMD, ou points éclairés dans l'objet par le DMD, qui sont des points, des peignes (pixels séparés entre eux et répartis sur une droite) ou des grilles de pixels, spatialement séparés. Il est possible ainsi de disposer l'image dispersée entre les points éclairés dans l'image, dont la distance donne l'intervalle spectral libre pour ajuster la dispersion du prisme. Le meilleur résultat est obtenu pour des images sur le DMD qui sont des grilles, sans perte de généralité, puisqu'il est possible en translatant une grille de paver une image, c'est-à-dire de recouvrir la totalité des points du modulateur à l'aide des grilles translatées. On considérera ainsi ci-dessous des images ou motifs sur le DMD qui sont des grilles.

Il est alors possible soit d'aligner commodément une direction d'un côté d'une grille carrée ou rectangulaire avec la direction de dispersion du prisme, ou bien la direction d'une diagonale afin de maximiser l'intervalle spectral libre entre deux points de la grille. On peut aussi utiliser des images de grilles de points espacés sur un motif ou réseau hexagonal pour une distance maximum entre deux points de la grille et donc un plus grand intervalle spectral libre.

Ce type d'éclairage par points espacés permet d'éviter le brouillage au niveau spectral, le segment image d'un point de l'objet à différentes longueurs d'onde, obtenu par dispersion par le prisme, trouvant sa place entre les différents points espacés éclairés dans l'objet au moyen du DMD, conjugué optiquement de cet objet et disposé sur la voie d'excitation ou d'illumination.

De préférence, la résolution minimum n'est pas limitée par le DMD, plusieurs pixels de la caméra pouvant recouvrir un seul pixel du DMD dans l'image. De cette façon, il est possible d'utiliser la dynamique des pixels de la caméra pour interpoler la position spectrale de l'image d'un point et améliorer la résolution finale. Par exemple, on peut régler le grandissement pour que l'image d'un pixel du DMD s'étende sur un carré de quatre pixels de la caméra (soit un carré de 2 pixels par 2 pixels).

Toutefois, pour ces images, la référence spatiale des longueurs d'onde entre elles est nécessaire et on décrit ci-dessous un procédé permettant de retrouver cette calibration ou référencement spatial ou spectral, chaque longueur d'onde étant codée par sa position sur la caméra grâce au prisme qui est dispersif, c'est-à-dire qui sépare les rayons lumineux à différentes longueurs d'onde angulairement.

Dans ce procédé, on intercale un filtre de fluorescence ou filtre coloré, centré sur une longueur d'onde donnée et de type passe-bande optique étroit autour de cette longueur d'onde, entre le séparateur de faisceau et la caméra, i.e. sur la voie d'imagerie du microscope et on génère un seul pixel à l'aide du DMD, ou un peigne de points ou une grille de points, ou un objet espacé ou discret connu en termes de pixels du DMD.

Le ou les filtres choisis sont à décalage de pixel nul (« zero shift »), i.e. ils sont chacun d'un parallélisme tels entre leur faces que leur introduction sur le chemin optique ne dévie pas l'image d'un point de l'objet de plus de la moitié de la résolution du système d'imagerie. De tels filtres sont connus de l'art antérieur et commercialisés par la société « Semrock » aux USA. Il est à noter que pour des lames à faces planes et parallèles, la dispersion en longueur d'onde est proportionnelle à l'angle du prisme et donc potentiellement négligeable, ce qui permet d'assurer qu'une déviation nulle entraîne une dispersion nulle et donc un fonctionnement adapté aux systèmes à très haute résolution ou à décalage de pixel nul sur la caméra utilisée.

Dans le plan objet du microscope conjugué du modulateur, qui est le plan focal objet pour les microscopes actuels, on peut disposer une solution de deux fluorophores ou fluorochromes, assurant que pour l'illumination du microscope, un spectre de fluorescence soit obtenu à une première couleur et une seconde couleur quel que soit le point unique sélectionné sur le DMD et donc éclairé dans le plan objet.

On peut alors utiliser la source d'illumination du microscope qui permet d'exciter la fluorescence pour un objet inconnu contenant les mêmes fluorophores que la solution de calibration et obtenir des images pour chaque couleur en chaque point de l'objet inconnu.

Par exemple, on peut illuminer un point unique d'un pixel du DMD et enregistrer l'image d'un tel objet ou réponse spectrale du système pour ce point, réponse codée ou repérée spatialement sur la caméra monochromatique, pour un premier filtre coloré donné, connu, intercalé sur la voie d'imagerie, i.e. entre le séparateur de faisceau et la caméra.

De cette façon, il est possible de déterminer une première image d'un point du DMD à travers l'ensemble de l'optique, sur la caméra pour la longueur d'onde centrale du premier filtre coloré adapté à la fluorescence à une première couleur, définie par ce filtre. On obtient ainsi une référence spatiale absolue associée sur la caméra à la première couleur.

On obtient ainsi la position de l'image d'un pixel du DMD sur la caméra à une première longueur d'onde, qui est la longueur d'onde centrale du premier filtre.

Pour une échelle des couleurs ou longueurs d'onde, sur la caméra, deux solutions sont praticables :
Soit on extrapole à partir de la première longueur d'onde la position spectrale des images, par calcul, à partir des paramètres du prisme et la dispersion en longueur d'onde avec son signe du prisme. La connaissance de l'indice du prisme et son angle au sommet permet de façon connue une telle prédiction de la dispersion en longueur d'onde de la position des images à une deuxième couleur ou à d'autres.
Soit on interpole entre deux longueurs d'onde en effectuant une seconde mesure ou enregistrement d'une deuxième image, à une deuxième longueur d'onde avec un deuxième filtre coloré adapté à la fluorescence du deuxième fluorophore.

Après ces opérations, il est donc possible d'obtenir une image d'un point objet qui est déviée spatialement en présence du prisme par rapport à l'image du point sans prisme, mais pour laquelle les images dans différentes bandes spectrales du point de l'objet sont superposées à moins d'un pixel de décalage entre elles sur la caméra. Il existe donc un décalage relatif de zéro pixel entre les images spectrales d'un même point. La référence spectrale peut être une longueur d'onde arbitraire. La référence spatiale de l'art antérieur qui était l'image sans prisme est donc remplacée dans ce mode par une référence spectrale d'une des images de l'objet dans une des bandes spectrales, sur laquelle les autres images spectrales ou colorées sont superposées.

Pour obtenir la réponse spectrale en tout point du DMD, chacun de ses points peut être illuminé en séquence. Cette opération étant faite une seule fois, elle peut être effectuée dans un laps de temps non contraint et pour chaque point. En pratique, on constate qu'il est suffisant d'enregistrer cette réponse tous les 10 pixels ou plus et de procéder à une interpolation entre les points calibrés pour les autres points, la réponse spectrale étant lentement variable entre les points pour des composants optiques de qualité et bien réglés.

On peut aussi faire cette détermination pour plusieurs longueurs d'onde en un point donné. Chaque enregistrement en plus du premier permet de déterminer une translation spectrale par rapport à la première longueur d'onde enregistrée en chaque point de l'image. Pour cela on peut utiliser plusieurs filtres colorés, centrés chacun à une longueur d'onde de transmission d'un fluorophore. De tels filtres sont usuellement disponibles pour un microscope de fluorescence.

Après la phase de calibration toutes les positions absolues des points images (en niveaux de gris) de tous les objets de 1 pixel du DMD obtenues par les filtres colorés sont connues ou calculables en fonction de la longueur d'onde. Elles sont commodément enregistrées dans une mémoire informatique. Si l'une des longueurs d'onde est prise pour référence, alors toutes les positions relatives des points colorés peuvent aussi être stockées.

Il est ainsi possible par cartographie, d'associer à un pixel du modulateur un ensemble de positions de ses images en fonction de la longueur d'onde. Inversement l'enregistrement des positions des images d'un pixel sur la caméra permet de leur associer une couleur pour un pixel dans un système de traitement d'image en couleur et d'obtenir une image en couleurs du pixel, pour peu que l'image de chaque couleur soit séparable des autres images en couleur des autres pixels imagés (en niveaux de gris) à un instant donné sur la caméra.

En pratique la dispersion dépend de la position dans le champ (à cause des aberrations géométriques des lentilles). On ne peut donc pas généralement procéder par bande de pixels contigus. Il faut donc généralement utiliser des objets ou motifs à points espacés sur le DMD pour la calibration : un point, un peigne ou une matrice ou grille de points et déterminer la dispersion spectrale pour chaque position du champ soit réellement par interpolation entre plusieurs mesures à des couleurs différentes, soit par calcul et extrapolation. Toute connaissance a priori de la réponse impulsionnelle optique des éléments peut être utilisée pour diminuer le nombre de points de calibration utilisés sur le DMD et la durée de cette opération.

On peut notamment effectuer la calibration pour plus de deux fluorophores pour obtenir un instrument ayant des capacités d'imagerie pour plus de deux couleurs et notamment pour chaque filtre coloré disponible sur un microscope particulier ou pour chaque fluorophore d'un échantillon donné.

Pour l'acquisition des images, on peut former des grilles lumineuses de 1 pixel séparées par exemple par 4 à 5 taches de diffraction du microscope, notamment sur une matrice carrée ou sur une matrice hexagonale. Une fois choisi le pas de la grille en fonction de la résolution du système optique, on choisit l'angle du prisme pour que tous les points colorés images d'un spectre de fluorescence d'un point soient contenus dans la grille choisie sans recouvrement d'un point de la grille à une autre longueur d'onde, lorsqu'ils sont dispersés par le prisme. De cette façon, on peut enregistrer tous les points de la grille en couleur en une seule fois, à la cadence de la caméra.

En pratique, pour la microscopie 3D, c'est la nécessité de séparer les points sources du fond de fluorescence hors plan focal, qui impose, de façon connue, la distance entre les points de la grille.

Pour enregistrer une image carrée ou rectangulaire ou d'une forme quelconque, on peut translater une grille dans des directions non-colinéaires jusqu'à avoir enregistré les images en couleur de tous les points de l'image carrée ou rectangulaire ou d'une autre forme, donnée par la forme du capteur de la caméra.

Si plusieurs pixels de la caméra recouvrent un pixel du DMD dans l'image, on peut utiliser l'intensité sur ces pixels de la caméra pour améliorer la résolution spatiale au-delà de celle du DMD, grâce à la caméra.

Il est ainsi possible, sans aucun masque coloré ni pièces mobiles, et connaissant par une calibration unique les translations ou positions associées à chaque longueur d'onde sur la caméra à un pixel donné, de choisir une longueur d'onde de référence, la première longueur d'onde calibrée, et de superposer les images colorées dont les places sont connues relativement à l'une d'entre elles, prise pour référence, en les translatant sur l'image de référence dans un système de traitement d'image. Il est possible de faire des séquences d'image ou images vidéo multicouleurs et hyperspectrales en 3D avec le dispositif.

Il est à noter que les filtres à utiliser pour la calibration, centrés sur les bandes d'émission des principaux fluorophores, en nombre limité, sont généralement présents sur un système d'imagerie par fluorescence dans un microscope et que la calibration est d'autant plus applicable à un grand nombre de dispositifs existants, à titre d'accessoire permettant l'imagerie ou la vidéo en couleur à la fréquence maximum d'acquisition de la caméra.

Il est à noter que la calibration spectrale du système optique incluant le filtre peut être faite préalablement à toute utilisation et une seule fois, par le fabricant ou l'utilisateur d'un microscope utilisant l'imagerie par fluorescence avec un même objet de calibration. Il est possible d'utiliser chez un fabricant une calibration avec un jeu de filtres étalons dont le parallélisme est le plus parfait possible et la transmission spectrale représentative de tous les filtres produits. Il est possible chez un utilisateur de calibrer avec les filtres fournis avec le microscope en acceptant leur parallélisme.

Dans tous les cas, la calibration peut être faite de façon asynchrone avec les mesures et les mesures peuvent être faites sans aucun filtre coloré, en utilisant la dispersion du prisme pour distinguer les spectres de fluorescence ou couleurs ou les longueurs d'onde centrales reçues par chaque pixel de caméra et les images de référence enregistrées. En pratique, à nouveau, un filtre et un miroir dichroïque, permettant de supprimer la ou les longueurs d'onde d'excitation, sont généralement nécessaires.

L'invention obtient donc avec une caméra monochromatique, une capacité d'imagerie en couleur, à une cadence fonction de la vitesse de la caméra.

Pour réaliser une image 2D il faut ainsi enregistrer toutes les positions de la grille d'illumination. Dans un cas typique il faut environ 200 images caméra pour obtenir une image 2D. Donc la cadence d'imagerie réelle est 1/200 vitesse camera, cette cadence d'imagerie est obtenue en imposant un synchronisme de la caméra avec le modulateur de façon électronique. En pratique, la caméra est donc synchronisée avec le DMD.

De façon remarquable, pour des motifs discrets, les images spectrales ou multicolores obtenues en 2D sont confocales (c'est à dire sectionnées ou sectionnables en z ou selon la direction de l'axe optique ou en profondeur) et adaptées à la microscopie 3D. Pour une grille, par exemple, les images étant nécessairement de motifs de points espacés pour les raisons ci-dessus d'intervalle spectral libre, elles sont en effet naturellement adaptées à un filtrage des fréquences spatiales discrètes de la grille d'éclairage par rapport au fond continu de la fluorescence hors-plan, issue de plans différents du plan objet et perpendiculaires à l'axe optique. Il est donc possible de déplacer le microscope par rapport à l'objet ou l'objet par rapport au microscope, par des moyens connus, pour obtenir après filtrage, des images 3D en couleur d'un objet fluorescent.

En pratique le sectionnement est d'autant meilleur que moins de points sont éclairés en même temps dans l'image par le DMD mais la cadence d'acquisition en est d'autant plus lente, le DMD ou la caméra limitant celle-ci. Il est possible par de simples opérations d'exécution d'ajuster pour un sectionnement en z donné la période de la grille et d'observer la cadence d'acquisition qui en résulte ou de fixer la cadence et d'opérer avec le sectionnement en z qui en découle.

On comprend que la séparabilité des images issues de différentes couleurs de l'objet, séparées d'abord angulairement par le prisme, puis spatialement sur la caméra, ou séparées en z (sectionnées) le long de l'axe optique du microscope, peut être variable. Ce critère peut être apprécié dans les mêmes termes que la limite de résolution dans les images optiques afin de vérifier si un motif choisi sur un modulateur spatial est adapté à la mise en œuvre de l'invention pour un prisme donné et des caractéristiques optiques données, de façon à donner toute son extension à l'invention. L'adaptation du motif peut être déterminé à la calibration grâce à ce critère préalablement aux mesures sur les objets à imager par le microscope.

L'invention est susceptible d'application industrielle dans le domaine des microscopes 3D pour l'observation en couleur de la fluorescence.

Il est entendu dans la présente demande que les mots « source de lumière » s'entendent aussi comme plusieurs sources de lumière (coaxiales) dont le spectre d'émission comprend une première bande spectrale et une seconde bande spectrale, pour obtenir l'excitation de la fluorescence du premier fluorophore à la première couleur et du deuxième fluorophore à la seconde couleur.

Il est entendu, au sens de la présente demande, qu'une « source de lumière dont le spectre d'émission comprend une première bande spectrale et une seconde bande spectrale » peut être obtenue par la superposition d'un premier faisceau lumineux d'une première source de lumière émettant dans la première bande spectrale et d'un second faisceau lumineux d'une deuxième source de lumière émettant dans la seconde bande spectrale, sans sortir de l'enseignement de la présente demande. Notamment, une source de lumière, au sens de la présente demande, peut être obtenue par plusieurs sources lasers de longueurs d'onde différentes et rendues coaxiales.

Il est entendu, au sens de la présente demande, que lorsqu'un prisme est introduit sur un faisceau lumineux, issu d'un point objet, et ayant traversé un microscope, il l'est préférentiellement à une position pour laquelle des rayons lumineux du faisceau, incidents sur le prisme, sont parallèles entre eux, au moins dans l'approximation de l'optique paraxiale, dans la mesure nécessaire à minimiser les défauts optiques ou aberrations géométriques ou chromatiques introduites par le prisme sur le faisceau lumineux qu'il transmet.

On entend par perte de référence spatiale sur une caméra munie d'un détecteur matriciel, un déplacement de l'image d'un point de l'objet par rapport au référentiel formé par la grille du détecteur matriciel de la caméra, supérieur à la moitié de la limite de résolution du système d'imagerie concerné, dans l'espace objet. Il est connu qu'un tel déplacement peut être induit par l'ajout et/ou le retrait d'un élément optique dans le montage.

Pour une image subissant une dispersion en longueur d'onde en plusieurs images colorées au sens d'associées chacune sur un détecteur monochromatique à une longueur d'onde inconnue ou à un intervalle en longueur d'onde faible autour d'une longueur d'onde inconnue, le problème de la perte de référence spatiale se caractérise par le fait qu'aucune image colorée à une longueur d'onde connue ou dans un intervalle en longueur d'onde faible autour d'une longueur d'onde connue, ne reste fixe ou ne se déplace de moins de la moitié de la limite de résolution du système d'imagerie concerné, dans l'espace objet.

Le problème de la perte de la référence spatiale dans les systèmes d'imagerie ne semble pas avoir été identifié dans l'art antérieur. Le procédé de calibration proposé dans la présente demande qui consiste à isoler une longueur d'onde connue ou un spectre connu par un filtre interférentiel dont le parallélisme et les conditions d'éclairage n'entraînent pas une perte de référence spatiale pour cette longueur d'onde ou ce spectre connu, apparaît donc comme un moyen de récupérer la référence spatiale pour cette longueur d'onde connue ou ce spectre connu. Ce procédé se généralise à autant de longueurs d'onde connues ou de spectres connus pour lesquels il est nécessaire d'avoir une référence spatiale, par exemple à autant de spectres de fluorophores pour un système de microscopie par fluorescence associant une couleur arbitraire (rouge, vert, bleu, ...) d'un système colorimétrique à un spectre de fluorophore pour représenter en fausses couleurs une image obtenue avec un système monochromatique avec la même résolution que le système d'imagerie utilisé sans dispersion en longueur d'onde de l'image.

De ce point de vue, on comprend de la présente demande que l'utilisation de tout élément dispersif en remplacement d'un prisme simple, comme une association de prismes (notamment prisme d'Amici) ou comme un réseau, est aussi dans l'enseignement de la présente demande, dans la mesure où il provoque une perte de référence spatiale à une longueur d'onde ou pour un spectre d'intérêt pour le système d'imagerie en couleurs. Il en serait notamment ainsi pour un élément ne déviant pas la lumière mais la dispersant comme un interféromètre de Michelson dès l'instant que ses défauts de parallélisme ou ses aberrations chromatiques entraînent une perte de la référence spatiale pour le spectre ou la longueur d'onde considérés.

Le concept inventif général du procédé de la présente demande apparaît finalement comme l'utilisation d'un filtre spectral préservant la référence spatiale sur une caméra monochromatique, pour calibrer spatialement et spectralement un système d'imagerie intégrant un élément dispersif spatialement et en longueur d'onde, c'est à dire l'établissement de la position spatiale de chaque longueur d'onde ou de la forme de chaque spectre d'intérêt sur le détecteur matriciel de la caméra monochromatique, avec une erreur de positionnement égale ou inférieure à la résolution spatiale ( ou la moitié de la résolution en fonction du critère choisi) du système d'imagerie utilisé pour former l'image sur la caméra.

On comprend de la présente demande, que le procédé peut être mis en œuvre de façon équivalente soit par insertion dans le chemin optique d'imagerie d'un élément préservant la référence spatiale, soit par insertion dans le chemin optique d'un élément calibré, i.e. mesuré quant à son changement de la référence spatiale avec une précision qui permet d'avoir un déplacement connu de la référence spatiale avec une erreur inférieure à la résolution du système d'imagerie et que l'on peut donc soustraire pour annuler la perturbation du composant ou élément introduit.

Par exemple, pour utiliser un filtre interférentiel à lames à faces planes et parallèles pour la calibration selon le procédé de l'invention, on peut de façon équivalente, soit imposer que ses tolérances de parallélisme entre ses deux faces et de planéité sur chaque face soient suffisamment basses pour que cette préservation soit acquise, soit évaluer la perturbation de référence spatiale au spectre d'intérêt d'après ses défauts de parallélisme ou la prévoir partiellement par le calcul par une mesure d'indice et d'angle entre faces du filtre interférentiel.

Il est aussi à noter que la transmission spectrale d'un filtre interférentiel utilisé pour la calibration, sera préférentiellement étroite et centrée sur le spectre d'émission du fluorophore qui sera utilisé pour l'imagerie, et ce, pour obtenir une calibration la plus fidèle possible pour le fluorophore considéré. De tels filtres sont connus de l'art antérieur.

Le procédé de l'invention apparaît encore comme un moyen de minimiser l'action d'un élément optique produisant une déviation géométrique variable en fonction de la longueur d'onde, introduit sur un chemin optique, par l'ajout et le retrait sur le chemin optique d'un filtre spectral produisant une déviation géométrique nulle en fonction de la longueur d'onde, ce qui paraît particulièrement paradoxal.

En considération des éléments ci-dessus, un prisme au sens de l'invention est tout élément provoquant une dispersion chromatique relative des images d'un point de l'objet qui est supérieure à un pixel sur la caméra ou à la résolution optique dans l'objet.

En considération des éléments ci-dessus, un filtre ou filtre interférentiel ou filtre optique au sens de l'invention est tout élément optique de transmission variable en fonction de la longueur d'onde, dont la déviation géométrique sur un système d'imagerie, est, en fonction de la longueur d'onde, nulle ou inférieure à la moitié de la résolution spatiale du système d'imagerie.

Le procédé de l'invention est susceptible d'application industrielle ou utile pour la calibration spectrale des systèmes d'imagerie monochrome, possédant un élément dispersif en longueur d'onde sur leur chemin optique.

Aux fins de la présente demande, dans le dispositif optique de l'invention le mot « entre » dans l'expression « disposé entre » signifie pour un composant optique C disposé « entre » un composant optique A et un composant optique B, que dans un fonctionnement normal du dispositif de l'invention, la lumière cheminant de A à B, par un chemin optique, rencontre d'abord C avant B ou que la lumière cheminant de B à A sur le chemin optique, par application du principe de retour inverse de la lumière, rencontre d'abord C avant A. De ce point de vue, C se trouve bien ainsi sur le chemin optique prévu pour la lumière entre A et B, ou entre B et A. Notamment, le système ou dispositif de l'invention est un système dit « non dé-scanné », dans lequel un séparateur est entre un modulateur et un objectif de microscope par opposition à un système dit « dé-scanné» dans lequel le modulateur est entre le séparateur et l'objectif de microscope. Cette distinction est essentielle car pour un système dé-scanné, le problème technique de la perte de la référence spatiale lors de l'introduction d'un élément dispersif, ne se pose pas de façon aiguë, le modulateur fournissant une référence spatiale.

Dans les systèmes de l'invention, le DMD ou le modulateur est conjugué d'un plan objet pour la lumière d'illumination (sur la figure 1, via la lentille 6 au plan foyer objet de laquelle le DMD 1 est disposé et via l'objectif de microscope 2) alors que le plan objet est conjugué du plan du détecteur de la caméra pour la lumière de fluorescence de l'objet. Autrement dit, dans une utilisation normale de tous les systèmes de l'invention, le modulateur est éclairé seulement par une lumière d'illumination, issue d'une source, le plan objet est éclairé seulement par la lumière d'illumination, et la caméra est éclairée seulement par la lumière de fluorescence, sous illumination, d'un objet fluorescent, disposé dans le plan objet; aucune image du modulateur sur la caméra, qui pourrait servir de référence spatiale dans l'image de l'objet sur la caméra, n'est ainsi formée par les systèmes de l'invention. L'invention est applicable comme décrit ci-dessus, à tout système de microscopie en fluorescence ou de fluorescence, utilisant un modulateur et une caméra conjugués chacun d'un même plan objet, par un moyen optique qui ne forme pas d'image du modulateur sur la caméra. On comprend toutefois de la demande que la séparatrice fonctionnant en réflexion pour la voie d'illumination et en transmission pour la voie de fluorescence (ou l'inverse) et associée à un objectif de microscope unique conjuguant le modulateur et la caméra avec un même côté du plan objet, pourraient être aussi bien remplacés, de façon équivalente, par un premier objectif de microscope conjuguant le modulateur avec un côté du plan objet pour l'illumination et par un second objectif de microscope conjuguant l'autre côté du plan objet avec la caméra via une séparatrice, éliminant la lumière d'illumination pour ne conserver que la lumière de fluorescence sur la caméra, de la même façon que décrit dans la demande pour un objectif de microscope unique.

On comprend de la présente demande que tout élément optique dispersif (prisme, réseau, ...) peut être utilisé de façon équivalente au prisme décrit ci-dessus, sans sortir de l'enseignement de la présente demande.

## Revendications

1. Microscope de fluorescence à champ large pour l'observation d'un plan objet dans un milieu objet tridimensionnel apte à émettre une lumière de fluorescence en réponse à une lumière d'illumination, **caractérisé en ce qu'**il comprend une première voie optique pour la lumière d'illumination, une deuxième voie optique pour la lumière d'illumination et la lumière de fluorescence et une troisième voie optique pour la lumière de fluorescence, dans lequel la première voie comprend un modulateur spatial (1) limitant le champ du microscope à champ large, dans lequel la deuxième voie s'étend entre le plan objet et un séparateur (3), dichroïque vis-à-vis de la lumière d'illumination et de la lumière de fluorescence, dans lequel la troisième voie s'étend entre la deuxième voie et une caméra (4) apte à détecter la lumière de fluorescence, dans lequel le microscope comprend un moyen optique pour conjuguer le modulateur spatial (1) avec le plan objet pour la lumière d'illumination et pour conjuguer le plan objet avec la caméra (4) pour la lumière de fluorescence et dans lequel la troisième voie comprend un élément optique dispersif pour la lumière de fluorescence.

2. Microscope à champ large selon la revendication 1, dans lequel le moyen optique comprend un objectif de microscope (2) disposé sur la deuxième voie.

3. Microscope à champ large selon la revendication 1, dans lequel le moyen optique comprend un premier objectif de microscope disposé sur la première voie et un second objectif de microscope disposé sur la deuxième voie.

4. Microscope à champ large selon la revendication 1, dans lequel l'élément optique dispersif est un prisme (5).

5. Microscope à champ large selon la revendication 1, dans lequel le modulateur spatial (1) est une matrice de micro-miroirs (DMD).

6. Microscope à champ large selon la revendication 1 dans lequel le modulateur spatial (1) est un disque tournant.

7. Procédé pour la calibration à une première longueur d'onde du microscope à champ large selon la revendication 1, comprenant les étapes suivantes:
- disposer dans un voisinage du plan objet un milieu objet apte à émettre de la lumière de fluorescence dans une première bande spectrale contenant la première longueur d'onde, en réponse à une première lumière d'illumination,
- disposer sur la troisième voie un premier filtre interférentiel apte à sélectionner spectralement un voisinage de la première longueur d'onde,
- illuminer séquentiellement par la première lumière d'illumination, chaque point du champ large du microscope dans le plan objet, au moyen du modulateur spatial (1),
- enregistrer une première image de chaque point du champ large du microscope, sur la caméra (4),
- enlever le premier filtre interférentiel de la troisième voie.

8. Procédé selon la revendication 7 pour la calibration à une deuxième longueur d'onde du microscope à champ large selon la revendication 1, consistant à répéter les étapes de la revendication 7 avec un deuxième filtre interférentiel, apte à sélectionner spectralement un voisinage de la deuxième longueur d'onde, pour obtenir une deuxième image de chaque point du champ large du microscope, enregistrée avec le deuxième filtre interférentiel sur la caméra (4).

9. Procédé d'utilisation du microscope à champ large selon la revendication 1, calibré selon le procédé de la revendication 8, comprenant les étapes suivantes:
- disposer au voisinage du plan objet, un échantillon apte à émettre une lumière de fluorescence dans un spectre de longueurs d'onde comprenant le voisinage de la première longueur d'onde et le voisinage de la seconde longueur d'onde, en réponse à une lumière d'illumination,
- illuminer le champ large du microscope selon une grille de points, au moyen du modulateur spatial (1),
- enregistrer l'image de chaque point de la grille pour le spectre de longueurs d'onde, sur la caméra (4),
- répéter les deux étapes ci-dessus en appliquant des translations à la grille dans le champ large du microscope, au moyen du modulateur spatial (1), jusqu'à avoir enregistré une image pour le spectre de longueurs d'onde de chaque point du champ large du microscope sur la caméra (4),
- déduire par traitement d'image, une première image d'un point de l'échantillon à la première longueur d'onde, à partir de la première image de ce point à la première longueur d'onde, obtenue par le procédé de calibration et de l'image de ce point pour le spectre de longueurs d'onde,
- déduire par traitement d'image, une deuxième image du point de l'échantillon à la deuxième longueur d'onde, à partir de l'image de ce point à la deuxième longueur d'onde, obtenue par le procédé de calibration et de l'image de ce point pour le spectre de longueurs d'onde.

10. Procédé selon la revendication 9 pour obtenir une image spectrale d'un échantillon, sectionnée le long d'un axe optique du microscope à champ large, dans lequel le traitement d'image comprend l'étape suivante:
- supprimer le fond continu dans les images enregistrées par la caméra (4).

## Patentansprüche

1. Weitfeld-Fluoreszenzmikroskop zur Beobachtung einer Objektebene in einem dreidimensionalen Objektmedium, das in der Lage ist, Fluoreszenzlicht als Reaktion auf Beleuchtungslicht zu emittieren, **dadurch gekennzeichnet, dass** es einen ersten optischen Weg für das Beleuchtungslicht, einen zweiten optischen Weg für das Beleuchtungslicht und das Fluoreszenzlicht und einen dritten optischen Weg für das Fluoreszenzlicht aufweist, wobei der erste Weg einen räumlichen Modulator (1) aufweist, der das Feld des Weitfeldmikroskops begrenzt, wobei sich der zweite Weg zwischen der Objektebene und einem Separator (3) erstreckt, der gegenüber dem Beleuchtungslicht und dem Fluoreszenzlicht dichroitisch ist, wobei sich der dritte Weg zwischen dem zweiten Weg und einer Kamera (4) erstreckt, die in der Lage ist, das Fluoreszenzlicht zu erfassen, wobei das Mikroskop optische Mittel zum Konjugieren des räumlichen Modulators (1) mit der Objektebene für Beleuchtungslicht und zum Konjugieren der Objektebene mit der Kamera (4) für Fluoreszenzlicht aufweist, und wobei der dritte Weg ein optisches Element aufweist, das für Fluoreszenzlicht dispergierend ist.

2. Weitfeldmikroskop nach Anspruch 1, wobei das optische Mittel ein Mikroskop-objektiv (2) aufweist, das auf dem zweiten Weg angeordnet ist.

3. Weitfeldmikroskop nach Anspruch 1, wobei das optische Mittel ein erstes Mikroskop-objektiv, das auf dem ersten Weg angeordnet ist, und ein zweites Mikroskop-objektiv, das auf dem zweiten Weg angeordnet ist, aufweist.

4. Weitfeldmikroskop nach Anspruch 1, wobei das dispersive optische Element ein Prisma (5) ist.

5. Weitfeldmikroskop nach Anspruch 1, wobei der räumliche Modulator (1) ein Mikrospiegelarray (DMD) ist.

6. Weitfeldmikroskop nach Anspruch 1, bei dem der räumliche Modulator (1) eine Drehscheibe ist.

7. Verfahren zur Kalibrierung bei einer ersten Wellenlänge des Weitfeldmikroskops nach Anspruch 1, das die folgenden Schritte aufweist:
- Anordnen eines Obj ektmediums in einer Umgebung der Objektebene, das in der Lage ist, Fluoreszenzlicht in einem ersten Spektralband, das die erste Wellenlänge enthält, als Reaktion auf ein erstes Beleuchtungslicht zu emittieren,
- Anordnen, auf dem dritten Weg, einen ersten Interferenzfilter anzuordnen, der geeignet ist, eine Umgebung der ersten Wellenlänge spektral auszuwählen,
- Sequentielles Beleuchten eines jeden Punktes des breiten Feldes des Mikroskops in der Objektebene mithilfe des räumlichen Modulators (1), mit dem ersten Beleuchtungslicht
- ein erstes Bild von jedem Punkt des breiten Feldes des Mikroskops auf der Kamera (4) aufnehmen,
- den ersten Interferenzfilter des dritten Kanals entfernen.

8. Verfahren nach Anspruch 7 zur Kalibrierung bei einer zweiten Wellenlänge des Weitfeldmikroskops nach Anspruch 1, bestehend aus der Wiederholung der Schritte nach Anspruch 7 aufweisend einem zweiten Interferenzfilter, das geeignet ist, eine Umgebung der zweiten Wellenlänge spektral auszuwählen, um ein zweites Bild von jedem Punkt des Weitfelds des Mikroskops zu erhalten, das mit dem zweiten Interferenzfilter auf der Kamera (4) aufgezeichnet wird.

9. Verfahren zur Verwendung des Weitfeldmikroskops nach Anspruch 1, das nach dem Verfahren von Anspruch 8 kalibriert wurde, aufweisend die folgenden Schritte:
- Anordnen einer Probe, die Fluoreszenzlicht in einem Wellenlängenspektrum, das die Umgebung der ersten Wellenlänge und die Umgebung der zweiten Wellenlänge aufweist, als Reaktion auf Beleuchtungslicht emittieren kann, in der Nähe der Objektebene,
- das breite Feld des Mikroskops mithilfe des räumlichen Modulators (1) in einem Raster von Punkten beleuchten,
- das Bild jedes Gitterpunkts für das Wellenlängenspektrum auf der Kamera (4) aufzeichnen,
- die beiden obigen Schritte wiederholen, indem mithilfe des räumlichen Modulators (1) Translationen auf das Gitter im breiten Feld des Mikroskops angewendet werden, bis ein Bild für das Wellenlängenspektrum von jedem Punkt im breiten Feld des Mikroskops auf der Kamera (4) aufgezeichnet ist,
- durch Bildverarbeitung ein erstes Bild eines Punktes der Probe bei der ersten Wellenlänge aus dem ersten Bild dieses Punktes bei der ersten Wellenlänge, das durch das Kalibrierungsverfahren erhalten wurde, und dem Bild dieses Punktes für das Wellenlängenspektrum ableiten,
- durch Bildverarbeitung ein zweites Bild eines Punktes der Probe bei der zweiten Wellenlänge aus dem zweiten Bild dieses Punktes bei der zweiten Wellenlänge, das durch das Kalibrierungsverfahren erhalten wurde, und dem Bild dieses Punktes für das Wellenlängenspektrum ableiten.

10. Verfahren nach Anspruch 9 zum Erhalten eines Spektralbildes einer Probe, geschnitten entlang einer optischen Achse des Weitfeldmikroskops, wobei die Bildverarbeitung den folgenden Schritt aufweist:
- Entfernen des kontinuierlichen Hintergrunds in den von der Kamera (4) aufgenommenen Bildern.

## Claims

1. A wide-field fluorescence microscope for observing an object plane in a three-dimensional object medium able to emit fluorescence light in response to illumination light, **characterized in that** it comprises a first optical channel for the illumination light, a second optical channel for the illumination light and the fluorescence light and a third optical channel for the fluorescence light, wherein the first channel comprises a spatial modulator (1) that limits the field of the wide-field microscope, wherein the second channel extends between the object plane and a beamsplitter (3), which is dichroic with respect to the illumination light and to the fluorescence light, wherein the third channel extends between the second channel and a camera (4) able to detect the fluorescence light, wherein the microscope comprises an optical means for conjugating the spatial modulator (1) with the object plane for the illumination light and for conjugating the object plane with the camera (4) for the fluorescence light and wherein the third channel comprises an optical element that is dispersive to the fluorescence light.

2. The wide-field microscope as claimed in claim 1, wherein the optical means comprises a microscope objective (2) placed in the second channel.

3. The wide-field microscope as claimed in claim 1, wherein the optical means comprises a first microscope objective placed in the first channel and a second microscope objective placed in the second channel.

4. The wide-field microscope as claimed in claim 1, wherein the dispersive optical element is a prism (5).

5. The wide-field microscope as claimed in claim 1, wherein the spatial modulator (1) is a digital micromirror device (DMD).

6. The wide-field microscope as claimed in claim 1, wherein the spatial modulator (1) is a spinning disk.

7. A method for calibrating, at a first wavelength, the wide-field microscope as claimed in claim 1, comprising the following steps:
- placing in a vicinity of the object plane an object medium able to emit fluorescence light in a first spectral band containing the first wavelength, in response to first illumination light,
- placing in the third channel a first interference filter able to spectrally select a vicinity of the first wavelength,
- sequentially illuminating, with the first illumination light, each point of the wide field of the microscope in the object plane, by means of the spatial modulator (1),
- recording a first image of each point of the wide field of the microscope, with the camera (4),
- removing the first interference filter from the third channel.

8. The method as claimed in claim 7 for calibrating at a second wavelength the wide-field microscope as claimed in claim 1, consisting in repeating the steps of claim 7 with a second interference filter able to spectrally select a vicinity of the second wavelength, in order to obtain a second image of each point of the wide field of the microscope, said image being recorded with the second interference filter, on the camera (4).

9. A method for using the wide-field microscope as claimed in claim 1 and calibrated using the method of claim 8, comprising the following steps:
- placing, in the vicinity of the object plane, a sample able to emit fluorescence light in a wavelength spectrum comprising the vicinity of the first wavelength and the vicinity of the second wavelength, in response to illumination light,
- illuminating the wide field of the microscope according to a grid of points, by means of the spatial modulator (1),
- recording the image of each point of the grid for the wavelength spectrum, with the camera (4),
- repeating the above two steps while applying translations to the grid in the wide field of the microscope, by means of the spatial modulator (1), until, for the wavelength spectrum, one image has been recorded of each point of the wide field of the microscope with the camera (4),
- deducing, by image processing, a first image of a point of the sample at the first wavelength, from the first image of this point at the first wavelength, said image being obtained using the calibrating method and the image of this point for the wavelength spectrum,
- deducing, by image processing, a second image of the point of the sample at the second wavelength, from the image of this point at the second wavelength, said image being obtained using the calibrating method and the image of this point for the wavelength spectrum.

10. The method as claimed in claim 9, for obtaining a spectral image of a sample, said image being selected along an optical axis of the wide-field microscope, wherein the image processing comprises the following step:
- removing the background contained in the images recorded by the camera (4).
